# EUROPEAN PATENT SPECIFICATION

(11) **EP 4 178 931 B1**
(45) Date of publication and mention of the grant of the patent: **21.01.2026**
(21) Application number: 21746098.9
(22) Date of filing: 07.07.2021
(51) Int. Cl.: C05C 3/00

(54) **METHOD OF PRODUCING A FERTILISER COMPOSITION**
VERFAHREN ZUR HERSTELLUNG EINER DÜNGEMITTELZUSAMMENSETZUNG
PROCÉDÉ DE PRODUCTION D'UNE COMPOSITION D'ENGRAIS

(30) Priority: 07.07.2020 GB 202010448
(43) Date of publication of application: 17.05.2023
(73) Proprietor: CCM Technologies Limited, Swindon SN3 4WH (GB)
(72) Inventor: HAMMOND, Peter, Swindon, SN3 4WH (GB)
(74) Representative: Appleyard Lees IP LLP
(86) International application number: PCT/GB2021/051734
(87) International publication number: WO 2022/008914

(56) References cited:
- EP-A1- 3 293 165
- DE-A1- 102016 122 869
- DE-A1- 102018 000 939
- US-A- 3 132 935

## Description

The present invention relates to a method of preparing a fertiliser, and to methods and uses relating thereto. In particular the present invention seeks to provide a fertiliser composition that is prepared from one or more waste products.

As the world's population grows there is an ever increasing need to maximise resources, reduce waste and recycle as much as possible. In particular it is essential to reduce waste that is sent to landfill and to reduce emissions of carbon dioxide. Furthermore there is a need to maximise crop yield and thus the provision of safe and effective fertilisers is also a necessity.

DE102016122869 describes a complete process for treatment of biowastes comprising an aqueous liquid phase in which at least urea and ammonium compounds and also inorganically and organically bound phosphates are dissolved and/or present in particulate form.

EP3293165 describes a process for producing fertilizer granules, wherein a suspension is generated from at least one phosphate-containing secondary raw material and at least one mineral acid.

DE102018000939 describes procedures for reducing or suppression of ammonia, ammonium and nitrous oxide emissions through the treatment of slurry and organic residues such as digestate from biogas plants in storage tanks and lagoons by using CO-containing exhaust gases.

According to a first aspect of the present invention there is provided a method of producing a fertiliser composition, the method comprising the steps of:
(a) contacting (i) ash from an organic source with (ii) a source of nitric acid;
(b) contacting (iii) a composition comprising an amino compound with (iv) a composition comprising carbon dioxide; and
(c) admixing the composition obtained in step (a) with the composition obtained in step (b).

Step (a) of the method of the present invention involves contacting (i) ash from an organic source with (ii) a source of nitric acid.

Component (i) comprises ash from an organic source. By this we mean to refer to the ash obtained from the incineration, pyrolysis or gasification of an organic material. This may be provided by the combustion of any organic material. For example in some embodiments component (i) may comprise the incinerated, pyrolysed or gasified waste from a water treatment plant or the ash obtained from the incineration, pyrolysis or gasification of a digestate cake obtained from an anaerobic digestion plant.

Organic ashes suitable for use in the present invention include high carbon materials commonly known as biochar.

Preferably component (i) comprises wood ash.

By wood ash we mean to refer to the residue remaining following the incineration, gasification or pyrolysis of wood. Component (i) may comprise any suitable source of wood ash. One preferred source is the incinerated waste from wood fired power stations. The ash produced in wood fired power stations typically contains light levels of compounds which can provide nutrients to plants, such as sources of phosphorus, calcium, potassium and magnesium. Preferably the wood ash comprises metal oxides, for example calcium oxide, magnesium oxide and potassium oxide as well as carbonates, for example calcium carbonate, phosphorus oxides and phosphate compounds may also be present.

Other preferred sources of wood ash include waste from a gasification plant or waste from a pyrolysis plant.

Typically wood ash comprises at least 10 wt% calcium salts, preferably at least 15 wt%.

In step (a) ash from an organic source, preferably wood ash, (i) is contacted with (ii) a source of nitric acid. Any suitable source of nitric acid may be used.

In some preferred embodiments the source of nitric acid is obtained from waste sources.

In some embodiments the source nitric acid may comprise waste from the scrubbing of combustion exhausts with nitric acid.

In preferred embodiments component (ii) is an aqueous composition. Preferably component (ii) is an aqueous composition comprising from 1 to 40 wt% nitric acid. In some embodiments component (ii) may comprise from 10 to 40 wt%, preferably from 15 to 35 wt%, more preferably from 20 to 35 wt%, suitably from 25 to 35 wt%, for example about 30 wt% nitric acid.

In preferred embodiments component (ii) comprises 1 to 15 wt%, preferably 2 to 10 wt% nitric acid.

In step (a) ash from an organic source, preferably wood ash (i) is mixed with a source of nitric acid (ii). The reaction may be carried out in any suitable apparatus. One preferred apparatus is a ribbon blender. Such apparatus will be known to the person skilled in the art. The reaction is exothermic. In some preferred embodiments the heat released is captured.

Since the organic ash such as wood ash often comprises calcium carbonate, carbon dioxide may be released in step (a). This is preferably captured and may be used, for example, in step (b).

Step (b) of the method of the present invention involves contacting (iii) a composition comprising an amino compound with (iv) a composition comprising carbon dioxide.

Component (iii) may comprise any suitable amino compound.

In some embodiments the composition may comprise a waste material containing an amino compound.

In preferred embodiments component (iii) comprises ammonia. This may be provided directly as ammonia or a source of ammonia may be provided such as a compound which releases ammonia or is converted to ammonia.

Any suitable source of ammonia may be used. In some embodiments the ammonia may be provided as a gas. Suitably the ammonia provided is anhydrous ammonia.

Steps (a) and (b) may be carried out in any order. They may be carried out separately but silmultaneously.

In some embodiments component (iii) may comprise a solution of ammonia. In some embodiments component (iii) may comprise a solid ammonium salt, for example solid ammonium hydroxide may be used.

In some embodiments component (iii) comprises an ammonia-containing waste stream from an anaerobic digestion process.

In some embodiments component (iii) may comprise a waste stream from an industrial process.

In some preferred embodiments the composition comprising an amino compound (iii) is an aqueous composition.

In some embodiments component (iii) comprises an anaerobic digestate.

As the skilled person will appreciate an anaerobic digestate is the material left following anaerobic digestion of a biodegradable feedstock. In some preferred embodiments the digestate is a methanogenic digestate.

Suitably the anaerobic digestate is provided as an aqueous composition, typically in the form of a sludge or slurry.

The anaerobic digestate may be obtained from the anaerobic digestion of any suitable material, for example grass silage, chicken litter, cattle slurry, wholecrop rye, energy beet, potato, wheat straw, chicken manure, cattle manure with straw, pig manure, food waste, food processing waste and sewage sludge.

Typically the anaerobic digestate is obtained from the anaerobic digestion of food waste or from the anaerobic digestion of farm slurry, for example pig or cow manure or chicken waste.

In some preferred embodiments component (iii) includes a source of ammonia and an anaerobic digestate.

In some preferred embodiments the source of ammonia is an ammoniacal liquor from an anaerobic digestion process.

In some embodiments gaseous ammonia may be pumped through an anaerobic digestate composition to provide component (iii).

In some embodiments an aqueous ammonia solution may be admixed with the anaerobic digestate to provide component (iii).

In some embodiments solid ammonium hydroxide may be admixed with the anaerobic digestate to provide component (iii).

In some preferred embodiments ammonia gas is pumped through the anaerobic digestate to provide component (iii).

In preferred embodiments component (iii) comprises an anaerobic digestate and from 10 to 60, preferably 20 to 50, more preferably 30 to 40 wt% ammonia.

In step (b) component (iii) is contacted with (iv) a composition comprising carbon dioxide. The composition comprising carbon dioxide (iv) may consist essentially of carbon dioxide and/or it may comprise a mixture of carbon dioxide and one or more further components.

In some embodiments the carbon dioxide may be provided in solid form.

Preferably step (b) involves contacting the composition comprising an amino compound (iii) with a composition comprising carbon dioxide (iv) wherein the composition of component (iv) is in gaseous form. Component (iv) may comprise neat carbon dioxide gas and/or it may comprise a gaseous mixture of carbon dioxide and one or more further gases.

Preferably component (iv) comprises at least 5 vol% carbon dioxide, preferably at least 10 vol%, preferably at least 20 vol%.

Component may (iv) comprises at least 50 vol% carbon dioxide, suitably at least 60 vol%, for example at least 80 vol%, at least 90 vol% or at least 95 vol%.

In some embodiments step (b) involves contacting the composition comprising an amino compound (iii) with neat carbon dioxide gas.

In some embodiments step (b) involves contacting the composition comprising an amino compound (iii) with the exhaust gas from combustion, for example the combustion of fossil fuel. For example step (a) may involve contacting the flue gases from a power station with the composition comprising an amino compound (iii).

The use of flue gases to provide the carbon dioxide is highly beneficial because the SOₓ and NOₓ gases present in the flue gas mixture may also provide additional nutrients in the final fertiliser composition in the form of sulphates and nitrates.

In some especially preferred embodiments component (iv) comprises biogas and step (b) involves contacting a composition comprising an amino compound, preferably ammonia, with biogas.

Biogas describes the mixture of methane and carbon dioxide that is obtained during anaerobic digestion. It may also comprise other gases in minor amounts, for example hydrogen sulphide. The exact levels of carbon dioxide and methane present in biogas depends on the mixture that has been digested and the digestion conditions. Typically biogas comprises from 20 to 80 vol% carbon dioxide, for example 30 to 70 vol%. In some embodiments biogas comprises from 40 to 45 vol% carbon dioxide and 55 to 60 vol% methane.

In some embodiments the composition comprising carbon dioxide (iv) may comprise the exhaust gases from the combustion of biogas, or of methane recovered from biogas.

One particular advantage of the method of the present invention is that it can use both the digestate and the biogas produced during anaerobic digestion.

In some preferred embodiments in which the composition comprising carbon dioxide (iv) comprises the exhaust gas from the combustion of fossil fuel and/or biogas, the hot gas mixture may be first contacted with a heat exchanger to capture heat energy from said gases.

During step (b) the carbon dioxide which is contacted with the composition comprising an amino compound (iii) is suitably retained within and forms part of a new composition. Thus step (b) suitably removes carbon dioxide from the source of carbon dioxide that it is contacted with. Thus in some embodiments step (b) may involve capturing carbon dioxide from an exhaust gas produced by combustion, for example of fossil fuel.

In some preferred embodiments step (b) involves removing carbon dioxide from biogas. The resulting biogas thus has an increased relative concentration of methane and will therefore burn more easily. Thus the present invention may provide a method of enriching biogas.

In step (b) carbon dioxide is suitably contacted with the composition comprising an amino compound for a time sufficient to ensure that at least 50% of the ammonia molecules present in the composition form an interaction with the carbon dioxide, preferably to ensure that at least 70%, more preferably at least 90%, preferably at least 95% and most preferably substantially all of the all of the ammonia molecules form an interaction with the carbon dioxide. Without being bound by theory it is believed that ammonium carbamates and bicarbonates are initially formed. This is then converted to ammonium carbonate.

The reaction of carbon dioxide with ammonia that occurs in step (b) is an exothermic reaction. Heat from this reaction may be captured. It may suitably be reused in the process.

In step (b) heat from the source of carbon dioxide and exothermic heat of reaction may be captured.

Although hot gases and an exothermic reaction are involved in step (b) preferably no external source of heat is supplied to the system.

Suitably the composition of the mixture in step (b) remains at a temperature of less than 100°C, preferably less than 80°C, suitably less than 60°C, preferably less than 50°C, suitably less than 40°C, for example less than 30°C throughout the contact with the composition comprising carbon dioxide.

Step (c) of the method of the present invention involves admixing the composition obtained in step (a) with the composition obtained in step (b).

Without being bound by theory it is believed that calcium nitrate salts and other nitrate salts form in step (a). Thus step (c) suitably involves admixing the composition obtained in step (b) with a composition comprising calcium nitrate.

As detailed above, in step (b) it is believed that carbon dioxide and ammonia react to form ammonium carbonate.

In step (c) it is believed that the calcium nitrate provided in step (a) and the ammonium carbonate provided in step (b) undergo an ion exchange reaction to form calcium carbonate and ammonium nitrate.

In some embodiments the method may further comprise a step (d) of adding a composition comprising cellulosic fibres to the composition obtained in step (c).

Any suitable source of cellulose fibres may be used.

Suitable cellulosic fibres include natural cellulosic fibres and semi-synthetic or processed cellulosic fibres.

The cellulosic fibres may comprise natural fibres and/or synthetic fibres and/or semi-synthetic fibres, for example regenerated cellulose products. Suitable synthetic fibres include polyamides, polyesters and polyacrylics. Preferably the composition used in step (d) comprises natural fibres.

Suitable natural cellulosic fibres for use herein include cotton, hemp, flax, silk, jute, kenaf, ramie, sisal, kapok, agave, rattan, soy bean, vine, banana, coir, stalk fibres and mixtures thereof.

In some preferred embodiments the composition added in step (d) comprises a waste product or a by-product from agriculture. Such cellulosic fibres would otherwise have little or no value in other applications. Suitable waste products or by-products may be the stems, leaves, chaff or husks of crops, for example cereals or rapeseed. In some preferred embodiments the cellulosic fibres comprise straw or wood pulp.

In some embodiments the cellulosic fibres may comprise wood pulp, for example the material sold under the trade mark TENSEL.

In some embodiments the cellulosic fibres may comprise the waste directly obtained from pulp mills, for example pine pulp.

In some embodiments the cellulosic fibres may comprise a straw material obtained from cereals, for example wheat, rye or barley.

In preferred embodiments the composition added in step (d) comprises a waste material.

In some embodiments step (d) may involve adding decomposing organic matter to the composition obtained in step (c).

In some preferred embodiments the composition comprising cellulosic fibres used in step (d) comprises partially decomposed organic matter containing cellulosic fibres.

Suitable sources of partially decomposed organic matter include compost or composting matter.

Compost is typically made up of organic material such as leaves, plant waste and food waste which has been decomposed under wet and aerobic conditions.

Thus in some preferred embodiments step (d) may involve adding a compost material comprising cellulosic fibres to the mixture obtained in step (c).

In some embodiments the composition added in step (d) may comprise an anaerobic digestate admixed with cellulosic fibres.

This may be provided alternatively or additionally to an anerobic digestate provided as part of component (iii).

For example the present invention may use the anaerobic digestate from animal waste wherein the animal waste is not separated from organic matter admixed therewith prior to digestion. For example sawdust or silage which is mixed with animal waste may be added to an anaerobic digester. The animal manure may be digested under anaerobic conditions but the cellulose or other organic matter present in the sawdust or silage may not be fully digested. However the resultant mixture comprising an anaerobic digestate and partially decomposed organic matter including cellulosic fibres could be useful in step (d).

In embodiments in which an anaerobic digestate comprising cellulosic fibres is added in step (d), the digestate is preferably dried before adding to the mixture obtained in step (c). It may be suitably be dried using heat captured from the exhaust gas of combustion (for example of fossil fuel or biogas) which provides the composition comprising carbon dioxide used in step (c) and/or during the exothermic reaction that occurs in step (b).

Compost and/or an anaerobic digestate may be added in step (d). However in preferred embodiments once this material has been admixed with the composition obtained in step (c) further compositing or digestion steps are not carried out.

In some embodiments the method of the present invention may involve the addition of one or more further components. Preferably the one or more further components provides a further source of one or more nutrients.

The one or more further components may be added before, after or during step (a); and/or before, during or after step (b); and/or before, during or after step (c); and/or before, during or after step (d).

In preferred embodiments the one or more further components comprises a waste material.

In some embodiments the method of the present invention may further involve adding a further source of nitrate ion.

In some embodiments the method of the present invention further involves adding a source of phosphorus.

The source of phosphorus may be added at any stage. Suitable sources of phosphorous include the incinerated bones of animals.

The source of phosphorus may be added before, after or during step (a); and/or before, during or after step (b); and/or before, during or after step (c); and/or before, during or after step (d).

Phosphorus may be present in an anaerobic digestate provided in component (iii).

A waste stream from the ODDA/nitrophosphate process may be used to provide a source of nitrate and a source of phosphorus.

Further or alternative sources of phosphorus may be added before, after or during step (a); and/or before, during or after step (b); and/or before, during or after step (c); and/or before, during or after step (d).

The material obtained following step (c) (and when present step (d)) of the method of the present invention can be used directly as a fertiliser composition and is highly nutritious. It contains many of the minerals that plants need for growth. It also provides a useful means of storing carbon dioxide.

Step (d) is an optional step. When step (d) is not included the product may be a liquid composition which may be suitable for application by spraying, for example.

Alternatively the material may be dewatered and/or dried to provide a solid.

This product obtained following step (c), or when present step (d), can be used directly as a fertiliser or can be further processed to provide an easier to handle form.

In some embodiments the method of the present invention involves a further step (e) of further processing the material obtained in step (c) or step (d). The further processing step (e) may involve drying, pulverising and/or granulating the material. Such processing methods will be known to the person skilled in the art.

Preferably step (e) involves pelletising the material obtained in step (c) or step (d). It has been advantageously found that the material obtained in step (c) (or step (d) when present) is easily pelletised. The pellets do not clump together and spread as readily as leading commercially available fertiliser compositions of the prior art.

Advantageously the present invention does not require high temperatures and pressures to be used. Suitably a temperature of less than 80°C and a pressure of less than 20 bar is maintained throughout the process. At a temperature of around 80°C a pressure of less than 5 bar, preferably less than 3 bar, for example about 2 bar or below may be maintained throughout the process.

Thus the method of the first aspect of the present invention may in some embodiments be carried out at ambient pressure.

The fertiliser composition provided by the method of the present invention suitably comprises at least 3 wt % of nitrogen, suitably at least 5 wt%, preferably at least 10 wt%, for example at least 12 wt%.

Suitably the fertiliser composition provided by the method of the present invention comprises up to 32 wt% nitrogen, preferably up to 30 wt%.

In some embodiments the composition comprises from 12 to 16 wt% nitrogen.

In some embodiments the composition comprises from 26 to 30 wt% nitrogen.

The composition preferably comprises one or more further plant nutrients, for example potassium or phosphate.

In some embodiments the composition comprises 2 to 22 wt% potassium.

In some embodiments the composition comprises 2 to 15 wt% phosphate.

The present invention offers significant advantages in that it uses multiple waste products to generate a useful fertiliser composition. For example the invention can use the incinerated waste from a wood burning power station and combine it with waste nitric acid to produce calcium nitrate. The invention can make use of an anaerobic digestate which is generally considered unsuitable for direct use as a fertiliser, as it is in the form of a sludge and thus difficult to apply. Optional admixing with cellulosic fibres can provide an easier to handle solid fertiliser composition having an improved nutrient composition. Furthermore the invention can make use of the biogas produced during anaerobic digestion. Thus the present invention can be put into effect at a location where anaerobic digestion is taking place.

The present inventors have tested products of the present invention and have found them to be as effective as a leading major fertiliser composition.

According to a second aspect of the present invention there is provided a method of increasing the nutrient content of a plant growing medium, the method comprising:
(a) contacting (i) ash from an organic source, preferably wood ash with (ii) a source of nitric acid;
(b) contacting (iii) a composition comprising an amino compound with (iv) a composition comprising carbon dioxide;
(c) admixing the composition obtained in step (a) with the composition obtained in step (b);
(d) optionally adding a composition comprising cellulosic fibres to the mixture obtained in step (c);
(e) optionally further processing the composition obtained in step (c) or step (d); and
(f) admixing the mixture obtained in step (c), step (d) or step (e) with the plant growing medium.

Steps (a), (b), (c), (d) and (e) of the method of the third aspect are preferred as defined in relation to the first aspect and preferred features of the first aspect apply to the third aspect.

The invention may be used to increase the nutrient content of any suitable plant growing medium.

Suitable plant growing media will be known to the person skilled in the art and include for example soil, compost, clay, coco, and peat.

Preferably the plant growing medium is soil.

The invention will now be further described with reference to the following non-limiting example.

### Example 1

The process of the invention was carried out as follows:
A. 250kg of 30% nitric acid were blended with 100kg of wood ash material (wood ash analysis; P₂O₅ 1.76%; K₂O 4.65% ; CaCO₃ 25%; CaO 15%; MgO 6%)
   The mixture was blended in a ribbon blender until the production of bubbles in the slurry (CO₂) ceased and the temperature of the unit started to fall. This took approximately 45 minutes and a maximal temperature of 45°C was achieved in the mixer.
   A sample of this material was dried and analysed and contained the following key components: P₂O₅ 1%; Ca(NO₃)₂ 51%; KNO₃ 6% and Mg (NO₃)₂ 4%.
B. Anhydrous ammonia is dissolved in an anaerobic digestate liquor in a dilution mixer to provide an aqueous composition comprising ammonia, composition X. Hot flue gases from methane combustion in the AD plant are directed through a heat exchanger where energy is recovered to dry digestate in a digestate dryer.
   Carbon dioxide from the flue gases were bubbled through composition X to form a paste comprising ammonium nitrate and calcium carbonate. The reaction time depends on the concentration of carbon dioxide in the flue gas, but can vary between 10 and 60 minutes. The reaction with carbon dioxide is exothermic, and heat from this reaction is recovered and used to dry digestate.
C. 110kg of the material obtained in step A was blended with the paste product obtained in step B. When the production of CO₂ from the system had ceased and the temperature of the slurry had stopped falling the mixer was turned off and the material passed to a dewatering belt press before being finished in a dryer at 45°C The material was dried to a moisture content of 15% and then pelletised.

The consistency of the pelletised product was appropriate for field spreading in the normal manner. NPK analysis of the pelletised product was found to be 12 4 5 (N:P:K). The composition was found to contain NH₄NO₃, 8% KNO₃ and 5% MgNO₃.

The material produced was chemically appropriate for use directly as a fertiliser. Furthermore the physical properties of the pellets allowed normal distribution, however, some of this material was also dried further and used as a powder formulation for precision delivery.

### Example 2

The product of example 1 was compared with a standard commercially available ammonium nitrate fertiliser.

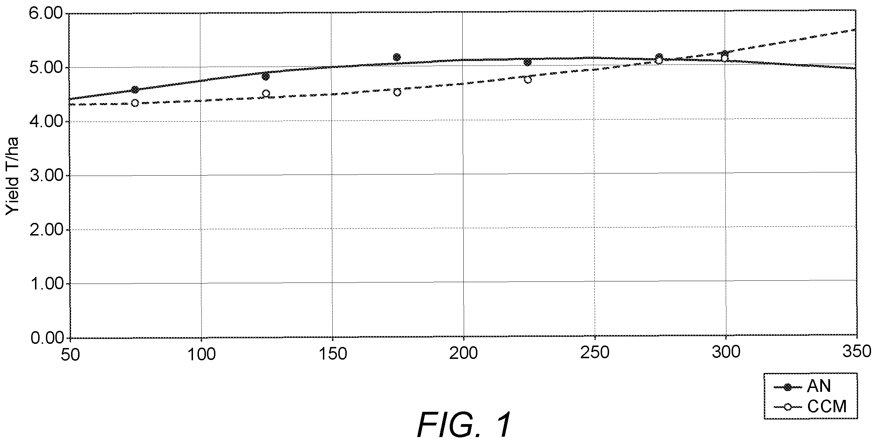

Equivalent amounts of the composition produced by the method of the invention (CCM) and the comparative material (ammonium nitrate, AN) were applied to growing winter wheat. The crop yields for the two compositions at various concentrations (kg N/Ha) are plotted in figure 1.

## Claims

1. A method of producing a fertiliser composition, the method comprising the steps of:
(a) contacting (i) ash from an organic source with (ii) a source of nitric acid;
(b) contacting (iii) a composition comprising an amino compound with (iv) a composition comprising carbon dioxide; and
(c) admixing the composition obtained in step (a) with the composition obtained in step (b).

2. A method according to claim 1 wherein component (i) comprises wood ash.

3. A method according to claim 2 wherein component (i) comprises incinerated waste from a wood burning power station, waste from a gasification plant or waste from a pyrolysis plant; preferably wherein component (i) comprises incinerated waste from a wood burning power station.

4. A method according to any preceding claim wherein component (ii) is an aqueous composition comprising from 15 to 35 wt% nitric acid.

5. A method according to any of claims 1 to 5 where component (ii) is an aqueous composition comprising from 2 to 10 wt% nitric acid.

6. A method according to any preceding claim wherein component (iii) comprises ammonia.

7. A method according to any preceding claim wherein component (iii) comprises an anaerobic digestate.

8. A method according to any claim 7 or claim 8 wherein component (iii) comprises an anaerobic digestate and from 20 to 50 wt% ammonia.

9. A method according to any preceding claim wherein component (ii) comprises an ammoniacal liquor from an anaerobic digestion process.

10. A method according to any preceding claim wherein component (iv) comprises neat carbon dioxide gas and/or a gaseous mixture of carbon dioxide and one or more further gases.

11. A method according to any preceding claim wherein component (iv) comprises at least 5 vol% carbon dioxide.

12. A method according to any preceding claim wherein component (iv) comprises the exhaust gases from the combustion of biogas, or of methane recovered from biogas.

13. A method according to any preceding claim which further includes a step (d) of adding a composition comprising cellulosic fibres to the composition obtained in step (c).

14. A method according to any preceding claim which further includes a step (e) of further processing the material obtained in step (c) or step (d); suitably wherein step (e) involves drying, pulverising and/or granulating the material.

15. A method of increasing the nutrient content of a plant growing medium, the method comprising:
(a) contacting (i) ash from an organic source with (ii) a source of nitric acid;
(b) contacting (iii) a composition comprising an amino compound with (iv) a composition comprising carbon dioxide;
(c) admixing the composition obtained in step (a) with the composition obtained in step (b);
(d) optionally adding a composition comprising cellulosic fibres to the mixture obtained in step (c);
(e) optionally further processing the composition obtained in step (c) or step (d); and
(f) admixing the mixture obtained in step (c), step (d) or step (e) with the plant growing medium.

## Patentansprüche

1. Verfahren zur Herstellung einer Düngemittelzusammensetzung, wobei das Verfahren die folgenden Schritte umfasst:
(a) Inkontaktbringen (i) von Asche aus einer organischen Quelle mit (ii) einer Salpetersäurequelle;
(b) Inkontaktbringen (iii) einer Zusammensetzung, die eine Aminoverbindung umfasst, mit (iv) einer Zusammensetzung, die Kohlendioxid umfasst; und
(c) Mischen der in Schritt (a) erhaltenen Zusammensetzung mit der in Schritt (b) erhaltenen Zusammensetzung.

2. Verfahren nach Anspruch 1, wobei Komponente (i) Holzasche umfasst.

3. Verfahren nach Anspruch 2, wobei Komponente (i) verbrannten Abfall von einem Holzverbrennungskraftwerk, Abfall von einer Vergasungsanlage oder Abfall von einer Pyrolyseanlage umfasst; wobei vorzugsweise Komponente (i) verbrannten Abfall von einem Holzverbrennungskraftwerk umfasst.

4. Verfahren nach einem der vorhergehenden Ansprüche, wobei Komponente (ii) eine wässrige Zusammensetzung ist, die zu 15 bis 35 Gew.-% Salpetersäure umfasst.

5. Verfahren nach einem der Ansprüche 1 bis 5, wobei Komponente (ii) eine wässrige Zusammensetzung ist, die zu 2 bis 10 Gew.-% Salpetersäure umfasst.

6. Verfahren nach einem der vorhergehenden Ansprüche, wobei Komponente (iii) Ammoniak umfasst.

7. Verfahren nach einem der vorhergehenden Ansprüche, wobei Komponente (iii) einen anaeroben Gärrest umfasst.

8. Verfahren nach einem der Ansprüche 7 oder 8, wobei Komponente (iii) einen anaeroben Gärrest und zu 20 bis 50 Gew.-% Ammoniak umfasst.

9. Verfahren nach einem der vorhergehenden Ansprüche, wobei Komponente (ii) ein Ammoniakwasser aus einem anaeroben Gärprozess umfasst.

10. Verfahren nach einem der vorhergehenden Ansprüche, wobei Komponente (iv) reines Kohlendioxidgas und/oder ein gasförmiges Gemisch aus Kohlendioxid und einem oder mehreren weiteren Gasen umfasst.

11. Verfahren nach einem der vorhergehenden Ansprüche, wobei Komponente (iv) zu mindestens 5 Vol.-% Kohlendioxid umfasst.

12. Verfahren nach einem der vorhergehenden Ansprüche, wobei Komponente (iv) die Abgase aus der Verbrennung von Biogas oder aus Biogas zurückgewonnenes Methan umfasst.

13. Verfahren nach einem der vorhergehenden Ansprüche, das ferner einen Schritt (d) des Zugebens einer Zusammensetzung, die Cellulosefasern umfasst, zu der in Schritt (c) erhaltenen Zusammensetzung umfasst.

14. Verfahren nach einem der vorhergehenden Ansprüche, das ferner einen Schritt (e) des weiteren Verarbeitens des in Schritt (c) oder Schritt (d) erhaltenen Materials umfasst; wobei Schritt (e) geeigneterweise das Trocknen, Pulverisieren und/oder Granulieren des Materials beinhaltet.

15. Verfahren zum Erhöhen des Näherstoffgehalts eines Pflanzenwachstumsmediums, wobei das Verfahren Folgendes umfasst:
(a) Inkontaktbringen (i) von Asche aus einer organischen Quelle mit (ii) einer Salpetersäurequelle;
(b) Inkontaktbringen (iii) einer Zusammensetzung, die eine Aminoverbindung umfasst, mit (iv) einer Zusammensetzung, die Kohlendioxid umfasst;
(c) Mischen der in Schritt (a) erhaltenen Zusammensetzung mit der in Schritt (b) erhaltenen Zusammensetzung;
(d) gegebenenfalls Zugeben einer Zusammensetzung, die Cellulosefasern umfasst, zu dem in Schritt (c) erhaltenen Gemisch;
(e) gegebenenfalls das weitere Verarbeiten der in Schritt (c) oder Schritt (d) erhaltenen Zusammensetzung; und
(f) Mischen des in Schritt (c), Schritt (d) oder Schritt (e) erhaltenen Gemischs mit dem Pflanzenwachstumsmedium.

## Revendications

1. Procédé de production d'une composition d'engrais, le procédé comprenant les étapes de :
(a) mise en contact de (i) cendres provenant d'une source organique avec (ii) une source d'acide nitrique ;
(b) mise en contact (iii) d'une composition comprenant un composé amino avec (iv) une composition comprenant du dioxyde de carbone ; et
(c) mélange de la composition obtenue à l'étape (a) avec la composition obtenue à l'étape (b).

2. Procédé selon la revendication 1, dans lequel le composant (i) comprend de la cendre de bois.

3. Procédé selon la revendication 2, dans lequel le composant (i) comprend des déchets incinérés provenant d'une centrale électrique de combustion du bois, des déchets provenant d'une installation de gazéification ou des déchets provenant d'une installation de pyrolyse ; de préférence, dans lequel le composant (i) comprend des déchets incinérés provenant d'une centrale électrique de combustion du bois.

4. Procédé selon l'une quelconque des revendications précédentes, dans lequel le composant (ii) est une composition aqueuse comprenant de 15 à 35 % en poids d'acide nitrique.

5. Procédé selon l'une quelconque des revendications 1 à 5, dans lequel le composant (ii) est une composition aqueuse comprenant de 2 à 10 % en poids d'acide nitrique.

6. Procédé selon l'une quelconque des revendications précédentes, dans lequel le composant (iii) comprend de l'ammoniac.

7. Procédé selon l'une quelconque des revendications précédentes, dans lequel le composant (iii) comprend un digestat anaérobie.

8. Procédé selon l'une quelconque parmi la revendication 7 ou la revendication 8, dans lequel le composant (iii) comprend un digestat anaérobie et de 20 à 50 % en poids d'ammoniac.

9. Procédé selon l'une quelconque des revendications précédentes, dans lequel le composant (ii) comprend une liqueur ammoniacale provenant d'un processus de digestion anaérobie.

10. Procédé selon l'une quelconque des revendications précédentes, dans lequel le composant (iv) comprend du gaz de dioxyde de carbone pur et/ou un mélange gazeux de dioxyde de carbone et d'un ou plusieurs autres gaz.

11. Procédé selon l'une quelconque des revendications précédentes, dans lequel le composant (iv) comprend au moins 5 % en volume de dioxyde de carbone.

12. Procédé selon l'une quelconque des revendications précédentes, dans lequel le composant (iv) comprend les gaz d'échappement provenant de la combustion du biogaz, ou de méthane récupéré à partir du biogaz.

13. Procédé selon l'une quelconque des revendications précédentes, qui comprend en outre une étape (d) d'ajout d'une composition comprenant des fibres cellulosiques à la composition obtenue dans l'étape (c).

14. Procédé selon l'une quelconque des revendications précédentes, qui comprend en outre une étape (e) de traitement supplémentaire du matériau obtenu à l'étape (c) ou à l'étape (d) ; de manière appropriée, dans lequel l'étape (e) implique un séchage, une pulvérisation et/ou une granulation du matériau.

15. Procédé d'augmentation de la teneur en nutriments d'un milieu de croissance végétale, le procédé comprenant :
(a) la mise en contact de (i) cendres provenant d'une source organique avec (ii) une source d'acide nitrique ;
(b) la mise en contact (iii) d'une composition comprenant un composé amino avec (iv) une composition comprenant du dioxyde de carbone ;
(c) le mélange de la composition obtenue à l'étape (a) avec la composition obtenue à l'étape (b) ;
(d) éventuellement l'ajout d'une composition comprenant des fibres cellulosiques au mélange obtenu à l'étape (c) ;
(e) éventuellement un traitement supplémentaire de la composition obtenue à l'étape (c) ou l'étape (d) ; et
(f) le mélange du mélange obtenu à l'étape (c), à l'étape (d) ou à l'étape (e) avec le milieu de croissance végétale.
